Europäisches Patentamt

(19) European Patent Office

Office européen des brevets

(11) Publication number: **0 167 276**
**B1**

(12) EUROPEAN PATENT SPECIFICATION

(45) Date of publication of patent specification: **15.03.89**

(21) Application number: **85303841.2**

(22) Date of filing: **31.05.85**

(51) Int. Cl.⁴: **F 16 K 35/06**

(54) Interlock mechanisms.

(30) Priority: **02.06.84 GB 8414133**

(43) Date of publication of application:
**08.01.86 Bulletin 86/02**

(45) Publication of the grant of the patent:
**15.03.89 Bulletin 89/11**

(84) Designated Contracting States:
**AT BE CH DE FR GB IT LI LU NL SE**

(56) References cited:
**EP-A-0 068 841**
**GB-A-2 045 855**
**GB-A-2 105 442**
**US-A-2 439 113**

(73) Proprietor: **Ellis, Alan Elgar Herbert**
**14 Scott Drive Lexden**
**Colchester Essex CO3 5LE (GB)**

(72) Inventor: **Ellis, Alan Elgar Herbert**
**14 Scott Drive Lexden**
**Colchester Essex CO3 5LE (GB)**

(74) Representative: **Gillam, Francis Cyril et al**
**SANDERSON & CO. European Patent Attorneys**
**34, East Stockwell Street**
**Colchester Essex CO1 1ST (GB)**

EP 0 167 276 B1

Courier Press, Leamington Spa, England.

## Description

This invention relates to an interlock mechanism for a plurality of rotatable members disposed in a mounting means and arranged such that when any one of the members has been turned from a 'base' or 'datum' position, all of the other members are restrained against rotation from their respective base or datum positions.

In the case of an industrial control system, it is not infrequently required to interlock together the operation of various members. For example, in a pipeline installation, it may be essential that certain fluid-flow control valves are operated only in a defined order, and to ensure this occurs, some kind of security system must be provided. This may be done by providing each valve with a key-lock mechanism, there being a special key box able to receive the keys of all the key lock mechanisms of the valves, and arranged so that a given key may be released only after certain other keys have been inserted into the box. Such a system does however have the disadvantage that the time of operation of the sequence of valves may be most protracted, if the valves are spread over the installation, for after each valve operation the key of that valve has to be returned to the central key box. Such an arrangement with a key box of this kind is described for example in GB-A-2045855.

More recently, there have been certain proposals for lock mechanisms for valves (or other components having a rotatable stub shaft), wherein a key may be released from the lock mechanism only when the valve (or other component) has been set to a pre-determined position—such that possession of the key positively indicates the valve has been set to that predetermined position. That key may then be used in conjuction with a key box, to permit the release of a further key, or that key itself may be used to permit actuation of some other valve, so ensuring proper sequencing of operation. The mechanisms involved in these proposals, such as described in GB-A-2105442, have been rather complex, and so unsuitable for installation in difficult environments, such as on oil rigs, where simplicity but reliability are paramount.

This invention aims at providing an improved form of interlock mechanism for rotatable members, suitable for incorporation for example in a fluid-flow control valve lock, key box or the like, where the rotatable members thereof are to be interlocked to prevent their rotation when any one has been turned from a base or datum position.

According to this invention, an interlock mechanism for a plurality of rotatable members each rotatably mounted in a mounting means with the axes of the plurality of members parallel and on a common pitch circle whereby each member may be turned about its own respective axis, which interlock mechanism is characterised by a plurality of cams one associated with each rotatable member respectively and each cam having a base portion and a lobe portion, and by a ring carried by the mounting means to surround with clearance all of the cams when turned to have their respective lobes directed inwardly of the common pitch circle, the circumferential length of the ring being such that when any one of the rotatable members is turned to engage the lobe of its associated cam with the ring, the ring is moved laterally nearer the base portions of the other cams so restraining the rotation of the other rotatable members associated with those said other cams.

It will be appreciated that with the present invention, any selected one rotatable member may be turned from its base or datum position, but when so turned, all of the other members are restrained from being turned from their respective base or datum positions. These base or datum positions are defined by the base of each respective cam facing the laterally movable ring.

The interlock mechanism of this invention may be used in a key box, in which case each rotatable member should be configured to receive a key, which is engageable with and releasable from the rotatable member only when the member is turned to engage the lobe of its cam with the ring. The key box would be assembled with all keys present and all cams having their base portions adjacent the ring; all the keys would then be held engaged with the associated rotatable members. On turning any one of the members such that the lobe of its cam engages the ring, to permit release of the associated key, all of the other rotatable members are thereafter restrained against turning movement, so preventing the removal of the keys therefrom.

The interlock mechanism of this invention may equally be used in a lock mechanism for a fluid-flow control valve, intended for mounting directly on the valve itself. For such a case, there may be three rotatable members, one (hereinafter referred to as a 'drive connection member' adapted to permit the connection of drive from a turning member to a valve operating member, and each of the other two (hereinafter referred to as a 'key member' configured to receive keys. Such a lock mechanism would be assembled with both keys present and the drive connection member also in place, whereby any one of the members may be turned, either to release a key or to connect the drive, but when anyone member has been turned, the others may not.

Such a valve lock mechanism may most advantageously be further refined, such that one of the key members may be turned to release its key only when the valve is at one extreme setting (for example, fully open), and the other key member may be turned to release its key only when the valve is at its other extreme setting (for example, fully closed). In this way, possession of a key shows the valve positively is at an extreme setting. Moreover, by appropriately indentifying the keys, it would be apparent to an operator which setting the valve is at, by inspecting the removed key. Of course, the drive connection member would have to be turned to disconnect the drive before either key could be removed by appropriate turning movement of the associated key member, when the valve has been set to an extreme setting.

In one embodiment of this invention, specifically designed for use with a rising stem fluid-flow control valve each of the two key members other than the drive connection member has a generally cylindrical outer surface but provided with a recess preferably in the form of a chordal flat which recess is engageable by an associated detent mechanism other than when the valve stem has reached an extreme position, whereat one of the two detent mechanisms respectively is released, depending upon the setting (i.e. fully open or fully closed) to which the valve has been moved. In this embodiment, the mounting means may have an axial bore in which the rising stem of the valve is received. Then, each detent mechanism may include a radial bore communicating with the axial bore for the rising stem, a detent member being slidable along the length of that radial bore between a first position in which the detent member engages the recess in one of the two rotatable members but does not significantly project into the axial bore for the rising stem, and a second position in which the detent member is free of the recess in the rotatable member but does project into the bore for the rising stem. With this arrangement, for the case of the fully closed key, the radial bore may suitably be positioned axially of the axial bore such that when the valve is fully closed, the rising stem has descended to an extent sufficient to come clear of the detent member, so permitting that member to move into the axial bore for the rising stem and so freeing the key member for rotation. In the case of the fully open key, the associated detent member may be maintained in the recess in the key member by means of a sleeve element located in the axial bore but of a greater outer diameter than the rising stem, the sleeve element being lifted clear of the detent member by the rising stem as the latter rises to its fully opened position; this then permits the detent member to move radially into the bore, so freeing the key member for rotation.

For the case of a valve having a turning member which is continously rotatable from one extreme setting to the other (for example a gear-driven valve) the continously rotatable turning member may be arranged to be driven by an externally screw-threaded component, interengaged with a screw-threaded sleeve such that the sleeve rises and falls as the valve is moved between its extreme settings. As with the above-described arrangement, each key member may have a generally cylindrical outer surface provided with a recess preferably in the form of a chordal flat, which recess is engageable by an associated detent mechanism other than when the screw-threaded sleeve has reached an extreme position whereat one of the two detent mechanisms respectively is released. Each detent mechanism may comprise a detent member located in a radially extending bore in the mounting means, the detent member when free of the recess of the associated key member projecting radially beyond the outer surface of the mounting means into a groove in the inner surface of the sleeve, whereby each detent member may be released only when the sleeve has moved axially to a position where one of the two grooves is aligned with one of the two detent members respectively. In this way, when the valve is fully opened and the sleeve is thus at one end of its travel, one key may be released on turning its associated key member, and when the valve is fully closed and the sleeve is at the other end of its travel, the other key may be released on turning its associated key member. The grooves in the sleeve are preferably annular, formed around the inner surface of the sleeve.

For the keys of the rotatable key members, a radial projection may be provided on the outer cylindrical surface thereof, receivable in an annular groove formed in the bore of the mounting means which has the associated key member journalled therein. By providing only one axially-extending keyway leading from an end face of the mounting means to that annular groove, the key may be removed from the mounting means only when turned to align its projection with that keyway—and the configuration should be such that the key member is turned thereby to a position where the lobe portion of its cam engages the ring, so locking the other members against turning movement.

Each key of cylindrical form may have two or more axially-extending slots in its inner cylindrical surface, the part of the key member with which the key is to be engaged having a cylindrical head of substantially the same diameter as the key inner cylindrical surface and having appropriately positioned projections receivable in the slots. By coding the angular separation of the projections and slots, each key may be made specific, for a particular key member.

Whatever the configuration of valve lock mechanism of this invention, it is preferred for it to be arranged as a security item, so inhibiting unauthorised tampering with the valve. It is moreover preferred for the lock mechanism to be securable to an essentially non-modified valve, whereby the lock mechanism may easily be fitted to an existing valve, and maybe removed from that valve for replacement by a conventional valve operating handle, if required, but when fitted, to provide excellent security. This may be done by providing a drive member adapted to be secured to the turning member of the valve, rotatably mounting the mounting means on the drive member, and arranging one of the rotatable members to permit the connection and disconnection of rotary drive between the mounting means and the drive member depending upon the angular position of that rotatable member. A sleeve may then surround at least part of both of the drive member and mounting means, which sleeve is adapted to prevent axial separation of the drive member and mounting means, there being a security fastening arranged to hold the sleeve in position interconnecting the drive member and the mounting means.

By way of example only, two specific embodiments of this invention will now be described, reference being made to the accompanying drawings, in which:-

Figure 1 is an exploded perspective view of a first embodiment of valve lock mechanism constructed in accordance with this invention and adapted for use with a rising stem valve;

Figure 2 is a cross-sectional view through the lock mechanism of Figure 1, when assembled;

Figures 3A and 3B show a removable key for use with the mechanism of Figures 1 and 2;

Figures 4A and 4B show the drive connection member of the mechanism;

Figures 5A and 5B show one rotatable key member engageable by a key, as used in the lock mechanism;

Figures 6A and 6B show the other rotatable key member;

Figures 7A and 7B show the operation of the lock ring for the rotatable members;

Figure 8 is a vertical sectional view through a second embodiment of valve lock mechanism constructed in accordance with this invention and adapted for use with a gear box driven valve, the section line VIII-VIII being shown on Figure 9;

Figure 9 is a split horizontal sectional view taken on line IX-IX marked on Figure 8; and

Figure 10 is a horizontal sectional view taken on line X-X marked on Figure 8.

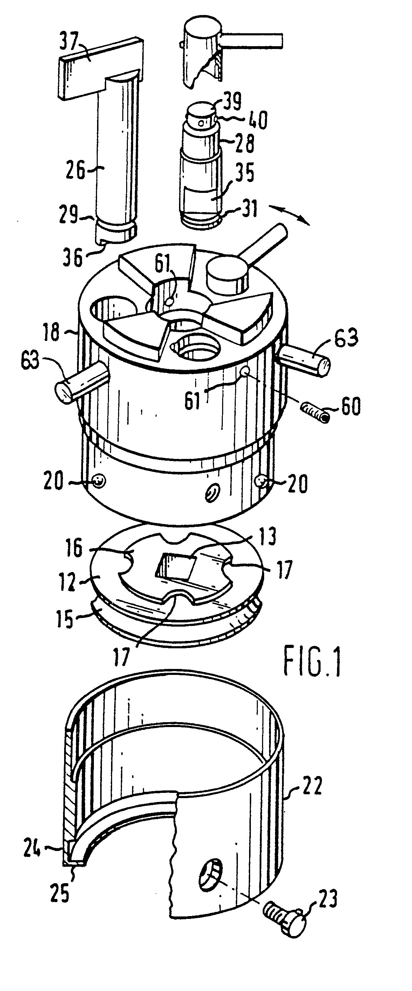

Referring initially to Figures 1 to 7, there is shown a valve lock mechanism of this invention specifically intended for use with a rising stem valve, and arranged to be used in conjunction with two removable keys. The arrangement is such that the valve cannot be opened or closed unless both keys are present, and such that one key may be removed when the valve is fully open, and the other key when the valve is fully closed. At all other valve settings, neither key may be removed from the valve lock mechanism. Moreover, the mechanism is intended to be secured to a conventional rising stem valve, with only the most minimal modification to the valve itself.

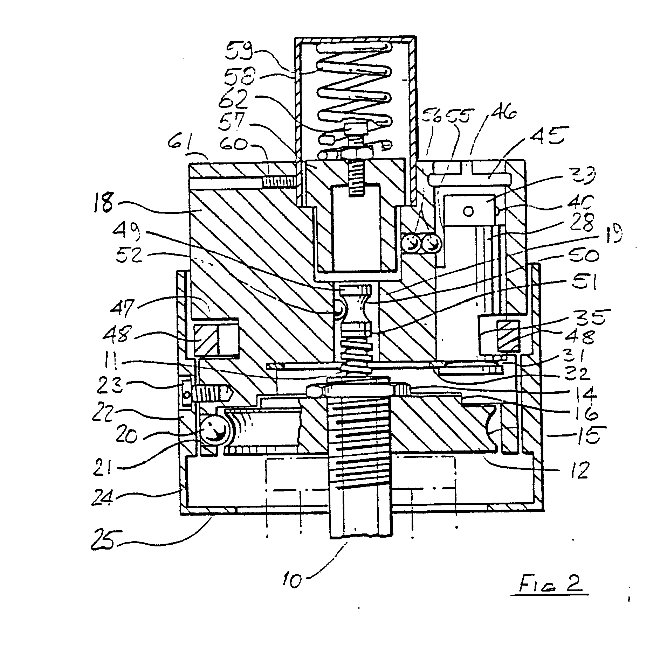

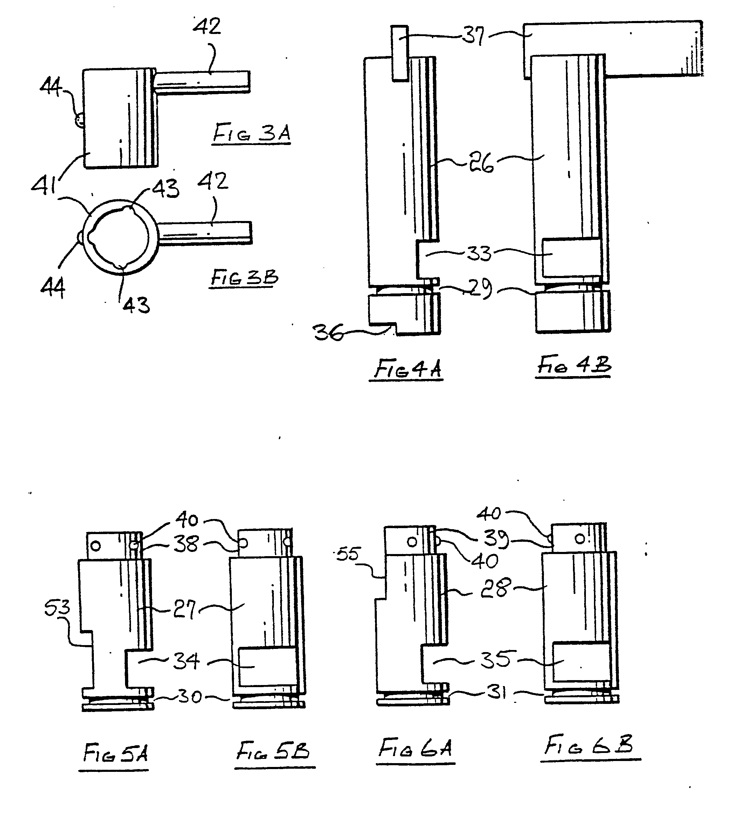

Though the valve proper is not shown in the drawings, it is provided with a driving stub 10 (Figure 2) of square cross-sectional shape and which is partially threaded to permit the attachment of a driving handle thereto. The stub 10 is rotatably mounted in a valve body and has a threaded bore, with which the rising stem 11 of the valve is engaged. The valve lock mechanism of this invention has a drive disc 12 which is specifically configured to suit the valve to which the lock mechanism is to be attached; the drive disc thus has a square central opening 13 for engagement with the stub 10 and is secured in position by nut 14, threaded on to the stub. The external periphery of the drive disc 12 has an annular groove 15, and on the upper surface of the disc there is provided a generally circular boss 16, having four arcuate cut-out portions 17.

The main body 18 of the valve lock mechanism is of generally cylindrical shape, and has an axial throughbore 19 with several sections of different diameters. The lower end portion of the axial bore 19 is of relatively large diameter and the drive disc 12 is rotatably received therein. These two components are restrained against axial separation by means of four balls 20 mounted in radial bores 21 in the portion of the main body 18 which surrounds the drive disc 12, such that the balls are located partly in the bores and partly in the peripheral groove 15 of the drive disc 12. The four balls are maintained in this position by a sleeve 22 which is fitted around the main body 18, the sleeve being held at the required position by means of a bolt 23 threaded into the main body and having its head located in an aperture in the sleeve 22. This bolt 23 is preferably of the security variety, and so may be removed only by an operator having an appropriately-configured key, rather than a conventional spanner. Once removed, the sleeve 22 may be raised upwardly so bringing the skirt 24 of the sleeve, which has an increased internal diameter, into register with the region of the main body carrying the balls 20, so that the balls may move radially outwardly and hence permit the main body 18 to be lifted clear of the drive disc 12.

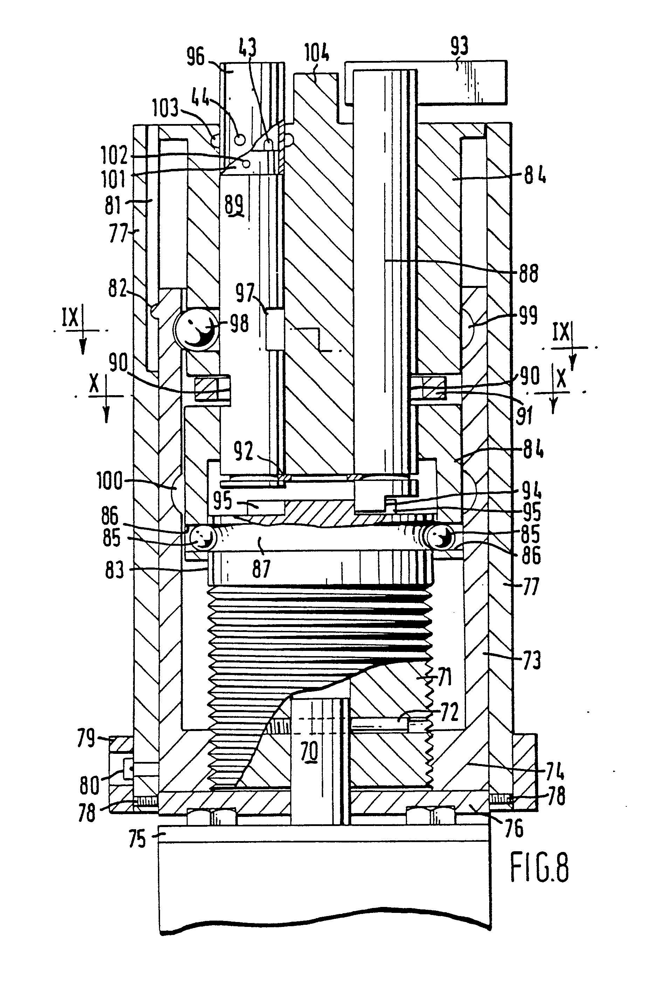

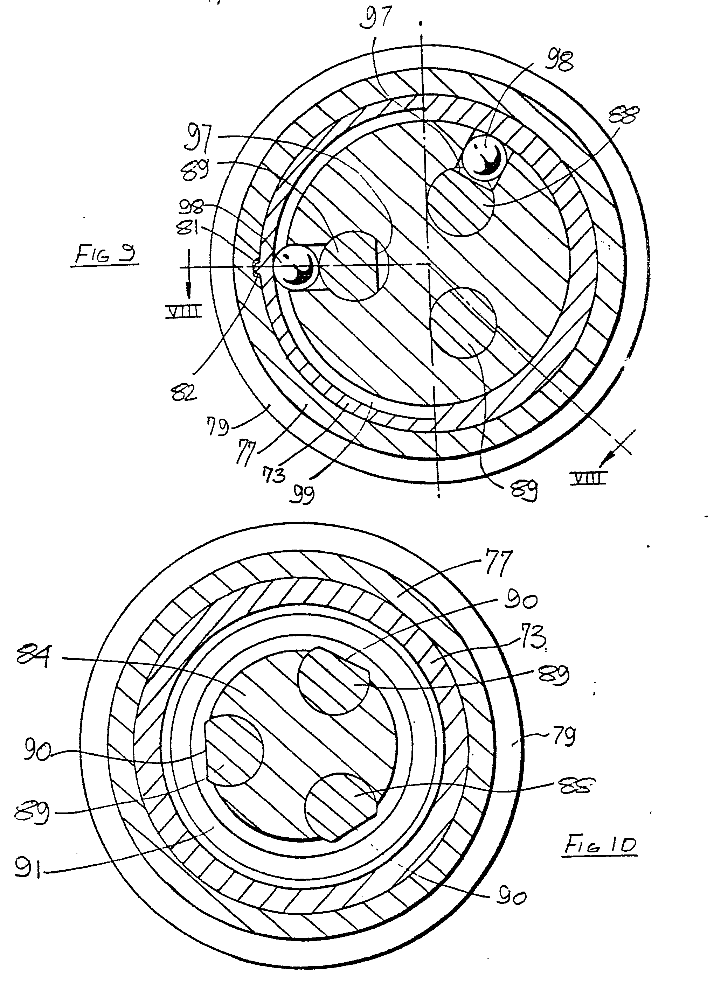

The lowermost part of the sleeve skirt has an inturned flange 25, which flange is suitably configured to surround the bonnet portion of the valve to which the lock mechanism is fitted. This restricts access to the parts of the valve securing the stub 10 in place, and so resists unauthorised removal of the lock mechanism, The main body 18 of the lock mechanism is provided with three equi-spaced bores each extending parallel to the axis of the main body. In one bore there is rotatably mounted a drive connection member 26 (Figures 1, 4A and 4B); in a second bore there is located a closed key member 27 (Figures 5A and 5B); and in the third bore there is located an open key member 28 (Figures 2, 6A and 6B). Each member 26, 27 and 28 has adjacent its lower end a groove 29, 30 and 31 respectively, and a circlip 32 is fitted into the main body 18 from below (as viewed in Figure 2) so as partially to be received in each groove, thereby to restrain withdrawal of each of the three members. Morever, the circlip 32 frictionally engages each member, so resisting rotation of each member, for example should the mechanism be subjected to vibration.

Also adjacent the lower end of each member 26, 27 and 28, there is provided a chordal flat 33, 34 and 35 respectively, such that each member has in effect a cam profile with the chordal flat serving as the base portion of the cam, and the arcuate outer surface of the member serving as the cam lobe. The drive connection member 26 has a further cam formed at its lowermost end, again by machining a chordal flat 36 into the end.

portion of the drive connection member, the flat 36 being diametrically opposed to flat 33.

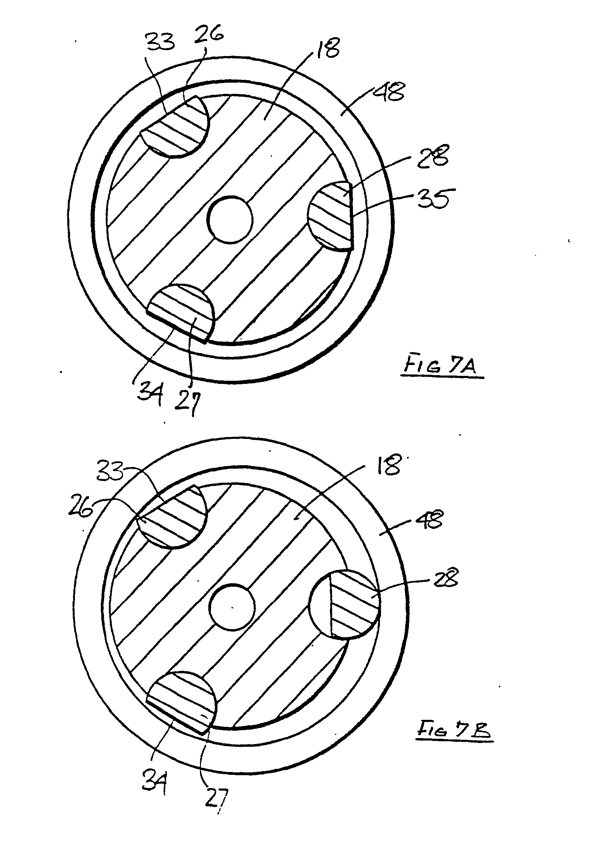

The drive connection member 26 is provided with a lever 37 to permit ready manual operation of that member, when assembled into the valve lock mechanism. The two key members 27 and 28 each has a cylindrical head 38 and 39 respectively, the members 27 and 28 being of such lengths that these heads remain within the main body 18 when the members are assembled thereinto. Each of the heads 38 and 39 is provided with three radial projections 40, the positions of which are pre-set so that the head may be engaged only by a key having a cylindrical recess with similarly configured slots for receiving the projections 40. Such a key is shown in Figures 3A and 3B and comprises a tubular section 41 having a radially-projecting handle 42 adjacent one end. Three slots 43 extending internally of the tubular section 41 are provided at suitable angular intervals to permit the key to be engaged with one of the heads 38 or 39, as appropriate. The key is also provided with a radially outwardly-directed projection 44, which projection lies in an annular groove 45 in the bore of the main body in which the key member is located, when the key has fully been engaged with the head of the associated key member. The annular groove 45 has but one axial slot 46 opening into the end face of the main body, such that the key may be fitted on to the head of the key member and removed from that head when the key is at but one relative rotational position, with respect to the main body 18.

The main body 18 has an external annular-groove 47 which groove is at the same axial position of the main body 18 as are the flats 33, 34 and 35 of the members 26, 27 and 28 respectively, when properly fitted into the main body 18. Located in the groove 47 is an annular rigid ring 48 the internal diameter of which is slightly greater than the smallest pitch circle which encircles the three flats 33, 34 and 35 of the three members 26, 27 and 28 as fitted in the main body 18. The ring 48 thus has a limited degree of freedom, as will be appreciated from Figure 7A. Should however any one of the members 26, 27 or 28 be turned from the position illustrated in Figure 7A to that illustrated in Figure 7B, the ring 48 is moved laterally by the member (in this case, member 28) which has been turned, so bringing the ring close to the flats of the other two members; in this way, subsequent rotation of the other two members (in this case, members 26 and 27) is inhibited. If one of those other two members is to be turned, then the already-turned member must be returned to its original position first.

The valve lock mechanism described above is configured to prevent rotation of the closed key member 27 other than when the valve is fully closed (i.e. the rising stem is at its lowermost position) and rotation of the open key member 28 other than when the valve is fully opened (i.e. the rising stem 11 is fully lifted). The former function is achieved by providing on the end of the stem 11 a stud 49 having an annular groove 50, the end of the stem 11 being internally screw-threaded to receive a corresponding-threaded projection of the stud 49, with as many spacers 51 as are required to secure proper operation located between the stud 49 and end of the stem 11. A radial bore (not shown) is drilled in the main body 18, aligned with the bore in which is located the closed key member 27, there being a line of three balls located in that bore, one of which balls 52 is partially visible in Figure 2. The closed key member 27 is provided with a further flat 53 diametrically opposed to flat 34, which flat is disposed so as to come into register with the bore containing the balls 52 when the closed key member 27 is positioned with its flat 34 adjacent the ring 48. When so disposed, the balls 52 may move to engage the flat 53, so clearing the groove 50 of the stud 49; as soon as the stem 11 has risen slightly, the balls 52 no longer may move radially towards the axis of the main body 18, and so the engagement of the balls with the flat 53 restrain rotation of the closed key member 27. The spacers 51 permit fine adjustment of the position of the stud 49 so as to have the groove 50 properly aligned with the balls 52 when the valve is fully closed, for any given installation having this valve lock mechanism fitted thereto.

The lock for the open key member 28 is generally similar to that described above, in that the key member 28 has a further flat 55 diametrically opposed to flat 35 and in that there are two balls 56 located in a radial bore provided in the main body 18, which balls serve to engage the flat 55 to prevent rotation of the key member other than when the valve stem 11 has risen fully, completely to open the valve. This is achieved by providing a slidable plug 57 in the top portion of the axial bore in the main body 18, the outer diameter of which plug may engage the balls 56, and the inner diameter being able to receive the end portion of the rising stem 11. The plug 57 is covered by a cap 58, a spring 59 urging the plug to the position shown in Figure 2 and the housing 58 being attached to the main body 18 by means of socket-headed screws 60, threaded into radial bores 61 provided in the main body 18. A screw-threaded adjuster 62 is mounted axially in the plug 57, so as to permit adjustment of the precise point at which the rising stem 11 starts to lift the plug 57, whereby the plug 57 may just come free of the balls 56 as the valve is fully opened, so as thereafter to permit rotation of the open key member 28.

Drive to the stub 10 is imparted from the main body 18 by way of the drive connection member 26, when turned from the position illustrated in Figure 7A. When so-turned, the lower end portion of that member opposed to flat 36 comes into engagement with one of the cut-out portions 17 of the drive disc 12, so locking together the main body 18 and the drive disc 12. Three equi-spaced tommy-bars 63 are provided in the main body 18, so as to permit the ready rotation of that main body to operate the valve, when the main body has been connected to the drive disc 12.

It will be appreciated that the lock mechanism as described above is assembled in such a way that the configuration of Figure 7A can be achieved only when both keys are engaged with their respective drive members and appropriately turned; then the drive connection member 26 may be turned to connect the main body 18 and the disc 12. As soon as this has been done, the valve may be operated, by applying drive to the bars 63, so turning the drive disc 12 either fully to open the valve or fully to close it. Though the drive connection member may release the main body 18 from the drive disc 12 at any intermediate setting of the valve, neither key member 27 or 28 may be turned to release its key at any such intermediate setting. When however, one or other extreme setting is reached, the drive connection member 26 may be turned to free the ring 48, which then permits either key member 27 or 28 to be turned. However, only one of those key members may be turned at either extreme setting of the valve, by virtue of the interlock provided by the balls 52 or 56, operating in conjunction with the movement of the valve stem 11.

The relevant key is removed by turning the key to the position where its projection 44 may leave the groove 45 through the slot 46; when turned to this position, the cam on the associated key member has displaced the ring 48 sideways (as shown in Figure 7B), so locking the other key member and the drive connection member 26 against rotation.

In the foregoing way, complete security of operation is assured, with only one key being removable at any one time and then only when the valve has been set either to the fully open or to the fully closed position. Whenever a key has been removed, then no drive can be imparted to the valve, so that operation of the valve is impossible unless both keys are present.

A whole series of valves may be locked in a similar way, for example where a number of valves have to be opened in a given sequence. For instance, by appropriate coding of the heads of the key members, a 'closed' key may be released from a secure store and inserted in a first valve lock, to permit opening of that valve. The 'open' key may then be removed and used as the 'closed' key of another valve lock—and so on until all of the valves have been opened.

Referring now to Figures 8, 9 and 10, there is shown a second embodiment of valve lock mechanism generally similar to that described above but adapted for use with a gear-box driven valve, wherein there is an input shaft 70 which is rotated in one sense or the other, to take the valve from one extreme setting to the other, the shaft 70 neither rising nor falling during this action. Again, no modification is necessary to the valve and its gear-box, to fit the lock mechanism of this invention.

The valve lock mechanism comprises a drive boss 71, fitted over the shaft 70 and secured against rotation with respect thereto by means of a cotter pin 72. The drive boss 71 is externally threaded, in this case with a left-hand thread, there being a sliding sleeve 73 provided with an inwardly-directed flange 74 threaded internally to engage with the threads on the drive boss 71. Trapped between the drive boss 71 and the top plate of the valve gear-box 75 is a base plate 76 for the valve lock mechanism, appropriately machined to fit against the particular gear-box and to be restrained against rotation with respect thereto. In this example, this is achieved by machining recesses in the base plate, to receive the valve gear-box bolts projecting upwardly from the top plate 75. A cylindrical casing 77 is a close sliding fit around the sleeve 73 and is secured to the base plate 76 by means of grub screws 78 threaded into the wall of the casing 77, to engage the base plate. A security ring 79 is fitted around the casing 77 so as to cover the grub screws 78, the ring 79 being held in place by a security bolt 80; disassembly of the valve lock mechanism thus requires an appropriate tool for releasing the security bolt 80, so permitting removal of the security ring 79 and hence giving access to the grub screws 78.

An axially-extending keyway 81 is provided internally within the casing 77 at the upper end portion thereof, the sliding sleeve 73 having a projection 82 engaged in that keyway whereby the sleeve 73 is restrained against rotation with respect to the casing 77 and hence with respect to the valve gear-box itself. Rotation of the drive boss 71 to move the valve between its two extreme settings will thus raise and lower the sleeve 73, and the pitch of the threads should be selected such that the number of turns required to take the valve between its two extreme settings just takes the sliding sleeve between its two end positions. For the case of a gear-box requiring a very large number of turns to drive the valve between its extreme settings, the drive boss 71 may be separated into a central drive boss proper and an externally-threaded outer tube, there being an intermittent motion mechanism between the boss and tube which imparts a small angular movement to the tube for every full turn on the drive boss. In this way, very large diameter valves having gear-boxes with large reduction ratios, may be protected by the valve lock mechanism.

The end of the drive boss 71 remote from the valve gear-box is provided with a cylindrical surface 83 on which is rotatably mounted a lock mechanism body 84. The cylindrical surface 83 is received in a bore in the body 84, and the two components are restrained against axial separation by means of a plurality of balls 85, each located partially in an associated radial bore 86 in the body 84 and partially in an annular groove 87 formed in the cylindrical surface 83. Each ball 85 has a greater diameter than the body wall thickness in the region of the bores 86, and so is prevented from leaving the annular groove 87 until such time as the drive boss 71 together with the body 84 are removed from the sliding sleeve 73.

Rotatably mounted in the body 84 are a drive connection member 88 and two key members 89, these being generally similar to the corresponding members 26, 27 and 28 of the first embodiment. Each member 88 and 89 has a flat 90 which co-operates with a ring 91, as shown in Figure 10, such that only one of the members may be turned at any one time from the position shown in Figure 10. Again, in a similar manner to that described above with reference to Figures 1 to 7, a circlip 92 is arranged to retain the members 88 and 89 in position, and to impart friction thereto, so as to prevent inadvertent rotation thereof.

Externally of the body 84, the drive connection member 88 has an operating lever 93, and at the other end of that member 88, there is a drive cam formed by providing a flat 94 in the member 88, which drive cam is engageable with one of four recesses 95 provided in the top surface of the drive boss 71, in a manner similar to that provided on the drive disc 12 of the first embodiment. Thus, turning the drive connection member 88 from the position illustrated in Figures 8 and 10, permits drive to be imparted from the body 84 to the drive boss 71, so permitting operation of the valve—but when in this position, the ring 91 has been moved laterally away from its position illustrated in Figure 10, so preventing operation of either key member 89. Conversely, either key member 89 may be turned away from the position illustrated in Figure 10 only when drive has been disconnected from boss 71, so the member 88 is in its position illustrated in Figure 10. A key 96 may be released from its key member 89 only when it has been turned away from its position illustrated, as with the previous embodiment.

Each key member 89 has further flat 97 disposed part-way along the length thereof and aligned with its flat 90. Each further flat 97 co-operates with a ball 98 located in a radial bore in the body 84, the ball 98 being of such diameter that the ball projects radially beyond the outer surface of the body 84 other than when the further flat 97 is aligned with that ball. The sliding sleeve 73 is provided with two axially spaced annular grooves 99 and 100, and in the position shown in Figure 8 (valve fully closed), groove 99 is positioned to receive the ball 98 of the closed key member 89, so permitting that ball 98 to move into the groove and allowing rotation of the key member 89. As shown in Figure 9, neither groove 99 nor 100 of the sleeve 73 is at this setting aligned with the ball 98 associated with the open key member 89 and so that key member is restrained against rotation in the position illustrated in that Figure. In this connection, it should be noted that the section IX-IX of Figure 9 is stepped, as shown on Figure 8, and that in Figure 10 the closed key member 89 is turned away from the position illustrated in Figures 8 and 9.

With the arrangement as described above, it will be appreciated that drive may be imparted to the drive boss 71 from the body 84 only when the drive connection member 88 has been turned to engage its drive cam with the drive boss 71. This may be done only when appropriate keys 96 are engaged with the associated key member 89 and turned such that the flats 90 of the two key members 89 face the ring 91, so permitting the flat 90 of the drive connection member 88 to be turned inwardly, away from the ring 91. When both key members 89 have their flats 90 facing the ring 91, the further flats 97 of those key members are presented to the associated balls 98, so permitting the sleeve 73 to move away from its extreme settings. Of course, as soon as the sleeve has been moved, the ball 98 no longer may move radially outwardly, so preventing either member 89 being turned back to release its key, even if the drive connection member 88 is turned to release the drive boss 71. One key may be released only when the valve has been set to one of its two extreme settings.

As with the first described embodiment, each key member 89 has a head 101 provided with projections 102 at coded spacings, whereby a key of the form shown in Figures 3A and 3B may be engaged therewith, provided the slots 43 in the key are appropriately positioned. The body 84 has a groove 103 and axial slot (not shown) corresponding to the groove and slot 45 and 46 of the first embodiment, whereby a key may be removed only when its projection 44 is aligned with the slot 104. This of course is when the key member 89 has been turned such that its flat 90 faces inwardly, so moving the ring 91 laterally and inhibiting rotation of either of the other key member 89 or drive connection member 88.

Though not shown in the drawings, provision must be made to impart drive to the body 84, to permit operation of the valve. This may be done by arranging for three tommy-bars to project radially from a boss 104, on top of the body 84, the bars extending between the three members 88 and 89.

## Claims

1. An interlock mechanism for a plurality of rotatable members each rotatably mounted in a mounting means with the axes of the plurality of members parallel and on a common pitch circle whereby each member may be turned about its own respective axis, which interlock mechanism is characterised by a plurality of cams one associated with each rotatable member (26, 27, 28 or 88, 89) respectively and each cam having a base portion (33, 34, 35 or 90) and a lobe portion, and by a ring (48 or 91) carried by the mounting means (18 or 84) to surround with clearance all of the cams when turned to have their respective lobes directed inwardly of the common pitch circle, the circumferential length of the ring (48 or 91) being such that when any one of the rotatable members (26, 27, 28 or 88, 89) is turned to engage the lobe of its associated cam with the ring (48 or 91), the ring is moved laterally nearer the base portions (33, 34, 35 or 90) of the other cams so restraining the rotation of the other rotatable members associated with those said other cams.

2. An interlock mechanism according to claim 1, characterised in that there are three rotatable members (26, 27, 28 or 88, 89), one (26 or 89) adapted to permit the connection of drive from the mounting means (18 or 84) to an operating member (12 or 73), and each of the other two (27, 28 or 88) configured to receive a respective key (41, 42 or 96) to effect the rotation thereof, a key being engageable with and releasable from its associated rotatable member (27, 28 or 88) only when that rotatable member is turned to have its cam lobe engaged with the ring (48).

3. An interlock mechanism according to claim 1 or claim 2, characterised in that the cam associated with each rotatable member is defined by a cylindrical portion of the rotatable member having an external chordal flat formed therein, the chordal flat (33, 34, 35 or 90) serving as the cam base portion and the remaining cylindrical portion serving as the cam lobe portion.

4. An interlock mechanism according to any of claims 1 to 3, characterised in that each key 41, 42 or 96) is retained in position engaged with its associated rotatable member (27, 28 or 88) by means of a peg (44) received in an annular groove (45 or 103) in a bore in the mounting means (18 or 84), there being an axial slot (46) permitting release of the key from and entry of the key into the bore only when the peg (44) is aligned with the slot (46).

5. An interlock mechanism according to any of claims 2 to 4 and adapted for use with a fluid-flow control valve, characterised in that one of the rotatable members (27, 28 or 88) may be turned to release its associated key (41, 42 or 96) only when a valve to which the interlock mechanism is connected is at one extreme setting and the other rotatable member may be turned to release its associated key only when the valve is at its other extreme setting, and the drive connection rotatable member is arranged such that it must be turned to disconnect the drive before either key may be removed.

6. An interlock mechanism according to claim 5 and adapted for use with a rising stem fluid-flow control valve, further characterised in that each of the two rotatable members (27, 28) other than the drive connection rotatable member (26) has a generally cylindrical outer surface but provided with a recess (53, 55) preferably in the form of a chordal flat which recess (53, 55) is engageable by an associated detent mechanism (52, 56) other than when the valve stem (11) has reached an extreme position, whereat one of the two detent mechanisms (52, 56) respectively is released.

7. An interlock mechanism according to claim 6, further characterised in that the mounting means (18) has an axial bore (19) in which the rising stem (11) of the valve is received, and each detent mechanism (52, 56) includes a radial bore communicating with the axial bore (19) for the rising stem (11), a detent member (52, 56) being slidable along the length of that radial bore between a first position in which the detent member engages the recess (53 or 55) in one of the two rotatable members but does not significantly project into the axial bore for the rising stem (11), and a second position in which the detent member (52, 56) is free of the recess (53 or 55) in the rotatable member but does project into the bore for the rising stem.

8. An interlock mechanism according to any of claims 1 to 5 and adapted for use with a fluid-flow control valve having a turning member which is continuously rotatable through more than 360° from one extreme setting to the other (Figure 8) characterised in that the turning member (70) is arranged to be driven by an externally screw-threaded component (71) interengaged with a screw-threaded sleeve (74) such that the sleeve rises and falls as the valve is moved between its extreme settings, each of the two rotatable members (89) other than the drive connection rotatable member (88) having a generally cylindrical outer surface but provided with a recess (97) preferably in the form of chordal flat, which recess (97) is engageable by an associated detent mechanism (98, 99, 100) other than when the sleeve (74) has reached an extreme position whereat one of the two detent mechanisms respectively is released.

9. An interlock mechanism according to claim 8, characterised in that each detent mechanism comprises a detent member (98) located in a radially extending bore (99 or 100) in the mounting means (84), the detent member when free of the recess (97) of the associated rotatable member (89) projecting radially beyond the outer surface of the mounting means (84) into a groove (99 or 100) in the inner surface of the sleeve (73), whereby each detent member may be released only when the sleeve (73) has moved axially to a position where one of the two grooves (99 and 100) is aligned with one of the two detent members, respectively.

10. An interlock mechanism according to any of the preceding claims, characterised in that each key (41, 42 or 96) is of cylindrical form and has at least two axially-extending slots (43) in its inner cylindrical surface, the part of the rotatable member with which the key is to be engaged having a cylindrical head (38, 39) of substantially the same diameter as the inner cylindrical surface of the key and having appropriately positioned and preferably coded projections (44) receivable in the slots.

11. An interlock mechanism according to any of the preceding claims and adapted for use with a fluid-flow control valve, characterised in that there is provided a drive member (12 or 71) adapted to be secured to the turning member of the valve, the mounting means (18, 84) is rotatably mounted on the drive member (12 or 71), one of the rotatable members (26 or 88) is arranged to permit the connection and disconnection of rotary drive between the mounting means and the drive member depending upon the angular position of that rotatable member, and a sleeve (22 or 77) is provided to surround at least part of both of the drive member (12 or 71) and mounting means (18 or 84) which sleeve (22 or 77) is adapted to prevent axial separation of the drive member and mounting means, there being a security fastening (23 or 78, 79, 80) arranged to hold the sleeve (22 or 77) in position interconnecting the drive member and the mounting means.

**Patentansprüche**

1. Ein Verriegelungsmechanismus für eine Vielzahl von drehbaren Gliedern, die mit parallel ausgerichteten Achsen jeweils drehbar auf einer Halterung und einem gemeinsamen Teilkreis angebracht sind, wobei jedes dieser Glieder um die eigene Achse gedreht werden kann und der Verriegelungsmechanismus durch eine Vielzahl von Nocken gekennzeichnet ist, und dadurch, dass eine Nocke auf ein drehbares Glied kommt (26, 27, 28, bzw. 88, 89) und jede Nocke aus einer Nocke (33, 34, 35 oder 90) und einer Nockennase besteht und einem Ring (48 oder 91), der von einer Halterung getragen wird (18 oder 84), um den Nocken bei der Drehbewegung zur Positionierung der entsprechenden Nockennasen im Innern des gemeinsamen Teilkreises genügend Spielraum zu verschaffen, wobei der Umfang des Ringes (48 oder 91) so bemessen ist, dass, falls eines der drehbaren Glieder (26, 27, 28 oder 88, 89) eine Drehbewegung vollführt, um die Nase der entsprechenden Nocke mit dem Ring (48 oder 91) in Kontakt zu bringen, der Ring sich seitlich näher zur Basis (33, 34, 35 oder 90) der anderen Nocken hinbewegt, so dass die Drehbewegung der anderen drehbaren Glieder mit besagten anderen Nokken eingeschränkt wird.

2. Ein Verriegelungsmechanismus nach Anspruch 1, dadurch gekennzeichnet, dass drei drehbare Glieder existieren (26, 27, 28 oder 88, 89) und eines der besagten Glieder (26 oder 89) so ausgebildet ist, dass eine Kraftübertragung von der Halterung zu einem operativen Glied (12 oder 73) ermöglicht wird, und jedes der beiden anderen Glieder (27, 28 oder 88) so ausgebildet ist, dass sie den entsprechenden Keil (41, 42 oder 96) aufnehmen können, um die Drehbewegung zu übertragen und der Keil nur dann beim entsprechenen Glied (27, 28 oder 88) ein- oder ausgeklinkt werden kann, wenn besagtes, drehbares Glied eine Drehbewegung erfährt, um dessen Nockennase in Kontakt mit dem Ring (48) zu bringen.

. 3. Ein Verriegelungsmechanismus nach Anspruch 1 oder 2, dadurch gekennzeichnet, dass die Nocken der entsprechenden Glieder sich durch einen zylindrisch ausgeformten Teil der drehbaren Glieder mit einem flachen, äusseren Segment auszeichnen, wobei das abgeflachte Segment (33, 34, 35 oder 90) als Nockenbasis und der restliche Teil als Nockennase dient.

4. Ein Verriegelungsmechanismus nach einem der Ansprüche 1 bis 3, dadurch gekennzeichnet, dass jeder Keil (41, 42 oder 96) in jedem entsprechenden drehbaren Glied (27, 28, oder 88) mittels eines Bolzens (44) durch eine ringförmige Aussparung oder Bohrung in der Halterung (18 oder 84) in Position gehalten wird, wobei die axiale Aussparung (46) das Ausklinken des Keils und Einklinken besagten Keils in die Bohrung nur dann erlaubt, wenn der Bolzen (44) axial zur Aussparung (46) ausgerichtet ist.

5. Ein Verriegelungsmechanismus nach einem der Ansprüche 2 bis 4 und zum Einsatz in Verbindung mit einem Ventil zur Steuerung der Flüssigkeitszufuhr bestimmt, dadurch gekennzeichnet, dass eines der drehbaren Glieder (27, 28 oder 88) eine Drehbewegung vollführen kann, um den entsprechenden Keil (41, 42 oder 96) nur dann auszuklinken, wenn ein mit dem Verriegelungsmechanismus verbundenes Ventil sich in einer der beiden Extrempositionen befindet, und das andere drehbare Glied nur dann eine Drehbewegung vollführen kann, um den entsprechenden Keil auszuklinken, wenn sich das Ventil in der anderen der beiden Extrempositionen befindet, und das zur Karftübertragung dienende, drehbare Glied so gebaut ist, dass es eine Drehbewegung zur Auskupplung der Kraftübertragung vollführen muss, bevor einer der besagten Keile eine Positionsänderung erfährt.

6. Ein Verriegelungsmechanismus nach Anspruch 5 und zum Einsatz zusammen mit einem Schieber mit Aussenspindel zur Steuerung der Flüssigkeitszufuhr bestimmt, weiter dadurch gekennzeichnet, dass ausser dem drehbaren Glied zur Kraftübertragung jedes der zwei drehbaren Glieder (27, 28) eine zylindrische Aussenseite aufweist, jedoch noch mit einem Einschnitt (53, 55), vorzugsweise in der Form eines flachen Segmentes (53, 55), ausgestattet ist, das mit einem Feststellmechanismus (52, 56) nicht nur dann arretiert werden kann, wenn die Ventilspindel (11) eine Extremposition erreicht hat, die dann einen der beiden Feststellmechanismen (52, 56) auslöst.

7. Ein Verriegelungsmechanismus nach Anspruch 6, weiter dadurch gekennzeichnet, dass die Haltevorrichtung (18) eine axiale Bohrung (19) aufweist, welche die Ventilspindel (11) aufnehmen kann, dadurch dass jeder Feststellmechanismus (52, 56) eine radiale Bohrung aufweist, welche mit der axialen Bohrung (19) für die Ventilspindel (11) verbunden ist, dadurch dass jedes Glied des Feststellmechanismus (52, 56) der ganzen Länge der radialen Bohrung entlang eine Bewegung vollführen kann, zwischen einer ersten Position, in der das Feststellglied Kontakt mit dem flachen Segment (53, 55) eines der beiden drehbaren Glieder macht, jedoch nicht viel in die axiale Bohrung für die Ventilspindel (11) hineinragt, und einer zweiten Position, in der das Feststellglied (52, 56) nicht in Kontakt mit dem flachen Segment (53, 55) eines der beiden drehbaren Glieder ist, jedoch in die Bohrung für die Ventilspindel hineinragt.

8. Ein Verriegelungsmechanismus nach einem der Ansprüche 1 bis 5 zum Einsatz in Verbindung mit einem Ventil zur Steuerung der Flüssigkeitszufuhr bestimmt, das eine kontinuierliche Drehbewegung um mehr als 360° von einer Extremposition bis zur anderen vollführen kann (Figur 8), dadurch gekennzeichnet, dass die Kraftübertragung auf das drehbare Element (70) durch eine Element (71) mit externem Schraubengewinde erfolgt, wobei besagtes Element mit einer Büchse (74) mit Schraubengewinde verbunden ist, so dass die Büchse eine Auf-, respektive Abwärtsbewegung vollführt, wenn das Ventil zwischen den beiden Extrempositionen hin und her bewegt wird, und dadurch, dass ausser dem drehbaren Glied (88) zur Kraftübertragung jedes der zwei drehbaren Glieder (88) eine zylindrische Aussenseite aufweist, jedoch noch mit einem Einschnitt (97), vorzugsweise in der Form eines flachen Segmentes (53, 55), ausgestattet ist, das mit einem Feststellmechanismus (98, 99, 100) nicht nur dann arretiert werden kann, wenn die Büchse (74) eine Extremposition erreicht hat, die dann einen der entsprechenden Feststellmechanismen auslöst.

9. Ein Verriegelungsmechanismus nach Anspruch 8, dadurch gekennzeichnet, dass der Feststellmechanismus ein Feststellglied (98) umfasst, das sich in einer radialen Bohrung (99 oder 100) in der Halterung (84) befindet, wobei das Feststellglied, ist es nicht in Kontakt mit dem flachen Segment (97) des entsprechenden drehbaren Elementes (89), radial über die Oberfläche der Haltevorrichtung (84) hinaus- und in eine Aussparung (99 oder 100) in der Innenfläche der Büchse (73) hineinreicht, und wobei jedes Feststellglied nur dann ausgeklinkt wird, wenn die Büchse (73) durch eine Axialbewegung in eine Position gebracht wird, in der die eine der beiden Aussparungen (99 und 100) vertikal auf eines der entsprechenden beiden Feststellglieder ausgerichtet ist.

10. Ein Verriegelungsmechanismus nach einen der voranstehenden Ansprüche, dadurch gekennzeichnet, dass jeder Keil (41, 42 oder 96) zylindrisch ist und auf der Innenfläche wenigstens zwei axiale Aussparungen (43) aufweist, wo bei der Teil des drehbaren Gliedes, der mit dem Keil Kontakt machen muss, einen zylindrischen Kopf (38, 39) von ungefähr demselben Durchmesser wie die zylindrische Innenfläche des Keils aufweist und in der entsprechenden Position, sowie vorzugsweise mit Markierungen (44) versehen, von den Aussparungen aufgenommen werden kann.

11. Ein Verriegelungsmechanismus nach einem der voranstehenden Ansprüche und zum Einsatz in Verbindung mit einem Ventil zur Steuerung der Flüssigkeitszufuhr bestimmt, dadurch gekennzeichnet, dass ein Element zur Kraftübertragung (12 oder 71) vorhanden ist, das am drehbaren Teil des Ventils angebracht werden kann, weiter dadurch gekennzeichnet, dass die Haltevorrichtung (18, 84) drehbar an der Kraftübertragung (12 oder 71) befestigt ist, dadurch dass das drehbare Element (26 oder 88) so ausgebildet ist, dass die Drehbewegung zwischen der Haltevorrichtung und dem zur Kraftübertragung dienenden Element je nach Winkel des besagten drehbaren Elementes gewährleistet ist und unterbrochen werden kann, und mit einer Büchse (22 oder 77) ausgestattet ist, die wenigstens einen Teil des Elementes zur Kraftübertragung (12 oder 71) und der Haltevorrichtung (18 oder 84) umgibt, wobei besagte Büchse (22 oder 77) die axiale Trennung zwischen dem kraftübertragenden Element und der Haltevorrichtung verhindert, und der Sicherheitsvorrichtung (23 oder 78, 79, 80), welche die Büchse (22 oder 77) in Position hält sowie die Verbindung zwischen dem Element zur Kraftübertragung und der Haltevorrichtung gewährleistet.

## Revendications

1. Un mécanisme de verrouillage pour une série d'éléments pivotants, chacun d'eux étant de façon à pouvoir tourner dans un dispositif de montage, les axes de cette série d'éléments étant parallèles et sur un cercle primitif commun, cela permettant à chaque élément de tourner autour de son axe propre, ce mécanisme de verrouillage se caractérisant également d'une part par une série de cames, une came étant respectivement associée à chaque élément pivotant (26, 27, 28 ou 88, 89), et chaque came ayant une base (33, 34, 35 ou 90) et un lobe, et d'autre part par une bague (48 ou 91) supportée par le dispositif de montage (18 ou 84) qui entoure avec un certain jeu toutes les cames lorsque celles-ci tournent pour avoir leur lobes respectifs dirigés vers l'intérieur du cerecle primitif commun, la circonférence de la bague (48 ou 91) é'tant telle que, lorsque l'un quelconque des éléments pivotants (26, 27, 28 ou 88, 89) tourne pour mettre le lobe de sa came correspondante en prise avec la bague (48 ou 91), la bague se déplace latéralement pour s'approcher de la base (33, 34, 35 ou 90) des autres cames cela limitant la rotation des autres éléments pivotants associés auxdites autres cames.

2. Un mécanisme de verrouillage, selon la revendication 1, caractérisé par le fait qu'il y a trois éléments pivotants (26, 27, 28 ou 88, 89), l'un (26 ou 89) étant adapté pour permettre le raccordement de la transmission du dispositif de fixation (18 ou 84) à un élément de manoeuvre (12 ou 13), et chacun des deux autres (27, 28 ou 88) étant configuré pour recevoir une clavette correspondante (41, 42 ou 96) de façon à effectuer la rotation, une clavette ne pouvant s'engager ou se desengager de son élément pivotant correspondant (27, 28 ou 88) que lorsque l'élément pivotant tourne pour que le lobe de sa came soit en prise avec la bague (48).

3. Un mécanisme de verrouillage selon la revendication 1 ou la revendication 2, caractérisé par le fait que la came associée à chaque élément pivotant est définié par une portion cylindrique de l'élément pivotant dans laquelle est ménagée une découpe externe permettant un encastrement, cette découpe (33, 34, 35 ou 90) correspondant à la base de la came, et le reste de la portion cylindrique correspondant aux lobes de la came.

4. Un mécanisme de verrouillage, selon l'une quelconque des revendications 1 à 3, caractérisé par le fait que chaque clavette (41, 42 ou 96) est retenue en prise avec l'élément pivotant qui lui est associé (27, 28 ou 88) par une cheville (44) qui vient se loger dans une rainure annulaire (45 ou 103) sur un alésage du dispositif de montage (18 ou 84), une encoche axiale (46) étant prévue pour ne libérer la clavette de son logement et ne l'y faire entrer que lorsque la cheville (44) est alignée sur l'encoche (46).

5. Un mécanisme de verrouillage, selon l'une quelconque des revendications 2 à 4, adapté pour une utilisation avec une vanne de régulation de débit de fluide, caractérisé par le fait que l'un des éléments pivotants (27, 28 ou 88) ne peut tourner pour libéber la clavette correspondante (41, 42 ou 96) que lorsqu'une vanne à laquelle est connectée le mécanisme de verrouillage est sur une position d'extrémité, l'autre élément pivotant ne pouvant tourner pour libérer la clavette correspondante que lorsque la vanne est sur l'autre position d'extrémité, et l'élément pivotant de connexion de transmission étant conçu de façon telle qu'il faille le tourner pour déconnecter la transmission avant que l'une des clavettes puisse être libérée.

6. Un mécanisme de verrouillage, selon la revendication 5, adapté pour une utilisation avec une vanne de régulation de débit fluide à vis extérieure, caractérisé en outre par le fait que les deux éléments pivotants (27, 28) autres que l'élément pivotant de l'élément de connexion de transmission (26) possèdant une surface extérieure généralement cylindrique mais dans laquelle un renfoncement (53, 55) est ménagé, de préférence sous la forme d'une découpe prévue our un encastrement, un mécanisme d'encliquetage correspondant (52, 56) autre que la tige de vanne (12) sur sa position d'extrémité pouvant s'enclencher dans le renfoncement (53, 55), suite à quoi l'un des deux mécanismes d'encliquetage (52, 56) est respectivement libéré.

7. Un mécanisme de verrouillage selon la revendication 6, caractérisé en outre par le fait que le dispositif de montage (18) possède un alésage axial (19) dans lequel passe la vise extérieure (11) de la vanne, chaque mécanisme d'encliquetage (52, 56) incluant un alésage radial communiquant avec l'alésage axial (19) de la vise extérieure (11), un élément d'encliquetage (52, 56) coulissant le long de cet alésage radial entre une première position dans laquelle l'élément d'encliquetage se met en prise avec le renfoncement (53 ou 55) de l'un des deux éléments pivotants, mais ne se projette pas de façon importante dans l'alésage axial de la vis extérieure (11), et une deuxième position dans laquelle l'élément d'encliquetage (52, 56) n'est pas en prise avec le renfoncement (53, 55) de l'élément pivotant, mais se projette dans l'alésage de la vis extérieure.

8. Un mécanisme de verrouillage, selon l'une quelconque des revendications 1 à 5, et adapté pour une utilisation avec une vanne de régulation de débit de fluide, doté d'un élément tournant qui pivote en continue sur plus de 360° depuis un réglage d'extrémité à l'autre (figure 8) caractérisé par le fait que l'élément tournant (70) est conçu pour être actionné par un élément à filetage extérieur (71) qui se visse dans un manchon à filetage interne (74), de façon telle que le manchon s'élève ou s'abaisse à mesure que la vanne se déplace entre ses réglages extrèmes, chacun des deux éléments pivotants (89) autres que l'élément pivotant de connexion de transmission (88) ayant une surface extérieure généralement cylindrique dans laquelle est ménagé un renfoncement (97) de préférence du type découpe prévue pour un encastrement, un mécanisme d'encliquetage associée (98, 99, 100) pouvant se mettre en prise dans ce renfoncement (97) dans des cas autres que lorsque le manchon (74) parvient à sa position d'extrémité, auquel cas l'un des deux mécanismes d'encliquetage est respectivement libéré.

9. Un mécanisme de verrouillage, selon la revendication 8, caractérisé par le fait que chaque mécanisme d'encliquetage comprend un élément d'encliquetage (98) qui se trouve dans un alésage à extension radiale (99 ou 100) du dispositif de montage (84), cet élément d'encliquetage se projetant radialement, lorsqu'il n'est pas en prise dans le renfoncement (97) de l'élément tournant correspondant (89), au-delà de la surface extérisure du dispositif de montage (84), dans une rainure (99 ou 100) ménagée sur la surface interne du manchon (73), chaque élément d'encliquetage ne pouvant être libéré que lorsque le manchon (73) se déplace axialement sur une position dans laquelle l'une des rainures (99 et 100) est alignée respectivement sur l'un des deux éléments d'encliquetage.

10. Un mécanisme de verrouillage, selon l'une quelconque des revendications qui précédent, caractérisé par le fait que chaque clavette (41, 42 ou 96) est de forme cylindrique et possède sur sa surface cylindrique interne au moins deux rainures qui s'tendant sur la plan axial, la portion de l'élément tournant avec laquel la clavette doit se mettre en prise ayant une tête cylindrique qui a essentiellement le même diamètre que la surface cylindrique interne de la clavette ainsi que des projections positionnées de façon appropriée de préférence codées (44) pouvant venir se loger dans les rainures.

11. Un mécanisme de verrouillage, selon l'une quelconque des revendications qui précédent, et adapté pour une utilisation avec une vanne de regulation de débit de fluide, caractérisé par le fait qu'un élément de transmission (12 ou 71) est prévu pour être fixé à l'élément pivotant de la vanne, que le dispositif de montage (18, 84) est monté de façon à pivoter sur l'élément de transmission (12 ou 71), que l'un des membres pivotants (26 ou 88) est prévu de façon à permettre la connexion de la déconnexion de l'élément de transmission pivotant entre le dispositif de montage et l'élément de transmission, en fonction de la position angulaire de cet élément pivotant, et qu'un manchon (22 ou 77) est prévu pour entourer au moins une partie de l'élément de transmission (12 ou 71) et du dispositif de montage (18 ou 24), ce manchon (22 ou 77) étant adapté de façon à éviter la séparation axiale de l'élément de transmission et du dispositif de mesure, une fixation de sécurité (23 ou 78, 79 80) étant prévue pour maintenir le manchon (22) ou 77) dans la position raccordant l'élément de commande au dispositif de fixation.

FIG.1

Fig 2

Fig 3A

Fig 3B

Fig 4A

Fig 4B

Fig 5A

Fig 5B

Fig 6A

Fig 6B

Fig 7A

Fig 7B

FIG.8

_FIG 9_

_FIG 10_